# EUROPÄISCHE PATENTSCHRIFT

(11) **EP 2 151 561 B1**
(45) Veröffentlichungstag und Bekanntmachung des Hinweises auf die Patenterteilung: **12.09.2018**
(21) Anmeldenummer: 09165044.0
(22) Anmeldetag: 09.07.2009
(51) Int. Cl.: F01P 3/18, B60K 11/04, F01P 11/06

(54) **Kühleranordnung für ein Fahrzeugkühlsystem**
Cooler assembly for a vehicle cooling system
Agencement de refroidisseur pour un système de refroidissement de véhicule

(30) Priorität: 31.07.2008 DE 102008040908
(43) Veröffentlichungstag der Anmeldung: 10.02.2010
(73) Patentinhaber: Deere & Company, Moline, IL 61265 (US)
(72) Erfinder: Fell, Thomas, 69198, Schriesheim (DE); Keim, Andreas, 67112, Mutterstadt (DE); Le, Duong M, Waterloo, IA 50701 (US)
(74) Vertreter: Dehnhardt, Florian Christopher

(56) Entgegenhaltungen:
- EP-A1- 1 930 197
- EP-A2- 1 707 420
- GB-A- 2 332 507
- GB-A- 2 355 700
- JP-A- H0 989 488
- JP-A- S6 050 024
- JP-A- 2000 212 995
- JP-A- 2004 196 191
- US-A1- 2007 251 669

## Beschreibung

Die Erfindung betrifft eine Kühleranordnung für ein Fahrzeugkühlsystem, mit einem Halteelement und wenigstens einem an dem Halteelement schwenkbar befestigten Kühlelement. Des Weiteren betrifft die Erfindung ein Fahrzeugkühlsystem mit einer derartigen Kühleranordnung. Das Fahrzeugkühlsystem ist insbesondere Bestandteil eines landwirtschaftlichen Kraftfahrzeugs, beispielsweise eines Traktors, einer Erntemaschine oder einer selbstfahrenden Spritzmaschine.

Landwirtschaftliche Kraftfahrzeuge weisen in der Regel eine Vielzahl unterschiedlicher Kühlelemente zur Abführung der beim Betrieb anfallenden Abwärme auf. Die Kühlelemente sind üblicherweise in Gestalt eines in einem Motorraum befindlichen Kühlerstapels in einem gemeinsamen Kühlluftstrom hintereinander angeordnet. Hierbei können sich aus der Fahrzeugumgebung über den Kühlluftstrom angesaugte Verunreinigungen auf der Oberfläche der Kühlelemente ablagern und deren Kühlleistung beeinträchtigen. Da vor allem die innenliegenden Kühlelemente des Kühlerstapels von außen nicht unmittelbar zugänglich sind und sich daher nicht ohne umständliches Zerlegen des Fahrzeugkühlsystems reinigen lassen, ist der Reinigungs- bzw. Wartungsaufwand dementsprechend hoch.

Aus dem Stand der Technik sind verschiedene Ansätze zur Umgehung dieses Problems bekannt.

Die Druckschrift EP 0 956 024 B1 offenbart eine aus mehreren Kühlelementen bestehende Kühleranordnung für ein landwirtschaftliches Nutzfahrzeug. Die Kühlelemente bilden jeweils eines von mehreren Seitenteilen einer gemeinsamen Luftansaugkammer, wobei die Luftansaugkammer eine die Kühlelemente tragende Rahmenstruktur aufweist. Wenigstens eines der Kühlelemente ist an einem zur Seite schwenkbaren Vorderteil der Rahmenstruktur befestigt. Da sämtliche Kühlelemente sowohl von außen als auch - durch Wegschwenken des Vorderteils der Rahmenstruktur - von innen zugänglich sind, lassen sich gegebenenfalls anfallende Reinigungs- und Wartungsarbeiten ohne umständliches Zerlegen des Fahrzeugkühlsystems durchführen. GB2355700 offenbart eine Kühleranordnung mit einem verschiebbaren Kühlerelement.

Ferner geht aus einem zum Mobilbagger M318D der Firma Caterpillar herausgegebenen Verkaufsprospekt ein Fahrzeugkühlsystem hervor, bei dem ein Lüfteraggregat sowie ein nachgeschalteter Kältemittelkondensator einer Klimatisierungseinrichtung des Mobilbaggers derart gehaltert sind, dass sich diese aus einer im Wesentlichen horizontalen Betriebsposition durch Hochklappen in eine von außen zugängliche Wartungsposition verschwenken lassen, in der eine beidseitige Reinigung des Lüfteraggregats bzw. des Kältemittelkondensators möglich ist.
Aufgrund des zum Verschwenken der Kühlelemente erforderlichen Platzbedarfs sind die bekannten Lösungen im Falle beengter Bauraumverhältnisse, wie sie typischerweise in einem Motorraum oder bei einer Anordnung der Kühlelemente in einem gemeinsamen Kühlerstapel vorherrschen, nicht geeignet.
Es ist daher Aufgabe der vorliegenden Erfindung, eine Kühleranordnung der eingangs genannten Art derart weiterzubilden, dass diese eine vereinfachte Reinigung bzw. Wartung eines Kühlelements in einem Fahrzeugkühlsystem auch im Falle beengter Bauraumverhältnisse ermöglicht.
Diese Aufgabe wird durch eine Kühleinrichtung mit den Merkmalen des Patentanspruchs 1 gelöst.
Die erfindungsgemäße Kühleranordnung für ein Fahrzeugkühlsystem umfasst ein Halteelement und wenigstens ein an dem Halteelement schwenkbar befestigtes Kühlelement, wobei das Halteelement derart entlang eines an dem Fahrzeugkühlsystem anbringbaren Führungselements längsverschiebbar angeordnet ist, dass sich das wenigstens eine Kühlelement aus einer Betriebsposition durch Verschieben und anschließendes Verschwenken in eine zur Reinigung vorgesehene Wartungsposition verbringen lässt. Das wenigstens eine Kühlelement kann insbesondere Bestandteil eines in einem Motorraum des Kraftfahrzeugs befindlichen Fahrzeugkühlsystems sein.

D.h. die erfindungsgemäße Kühleranordnung ermöglicht es, das wenigstens eine Kühlelement vor dem Verschwenken durch Verschieben in eine im Wesentlichen außerhalb des Motorraums liegende (Zwischen-)Position zu verbringen. Insbesondere besteht die Möglichkeit, die erfindungsgemäße Kühleranordnung für die Verwendung in einem Kühlerstapel derart auszubilden, dass die Kühlelemente kassettenförmige Einschübe bilden, die sich einzeln aus dem Kühlerstapel herausziehen und außerhalb des Kühlerstapels bzw. des Motorraums des Kraftfahrzeugs in eine zur Reinigung bzw. Wartung geeignete Position verschwenken lassen. Alternativ kann auch nur das äußerste Kühlelement des Kühlerstapels in der vorstehend beschriebenen Weise verschiebbar und anschließend verschwenkbar sein, sodass zumindest dessen Rückseite bzw. die Vorderseite eines unmittelbar dahinter liegenden Kühlelements von außen zugänglich ist.

Es sei an dieser Stelle angemerkt, dass der Einsatz der erfindungsgemäßen Kühleranordnung nicht auf einen bestimmten Kühlertyp und/oder einen bestimmten Einbauort im Kraftfahrzeug beschränkt ist. Vielmehr kann die erfindungsgemäße Kühleranordnung überall dort im Kraftfahrzeug eingesetzt werden, wo aufgrund baulich bedingter Einschränkungen eine Reinigung bzw. Wartung des Fahrzeugkühlsystems nur mit erhöhtem Aufwand möglich wäre.

Bei dem wenigstens einen Kühlelement kann es sich beispielsweise um einen Kondensator einer Klimatisierungsanlage des Kraftfahrzeugs, einen Ölkühler zur Kühlung von Getriebeöl eines Fahrzeuggetriebes, einen Ladeluftkühler zur Kühlung von Ladeluft eines Verbrennungsmotors des Kraftfahrzeugs, einen Luft-Flüssigkeits-Kühler eines Hoch- oder Niedertemperaturkreislaufs des Kraftfahrzeugs, oder um eine beliebige Kombination mehrerer der vorstehend genannten Kühlelemente handeln.

Vorteilhafte Ausführungen der erfindungsgemäßen Kühleranordnung gehen aus den Unteransprüchen hervor.

Vorzugsweise umfasst das Führungselement eine Gleitstange. Die Gleitstange weist einen kreisförmigen Querschnitt mit einem Durchmesser typischerweise im Bereich von 5 bis 15 mm auf.

Das Führungselement kann ferner einen Befestigungsschenkel zur Anbringung an dem Fahrzeugkühlsystem umfassen. Genauer gesagt erfolgt die Befestigung mittels eines im Endbereich des Befestigungsschenkels ausgebildeten Befestigungselements, beispielsweise eines an dem Befestigungsschenkel ausgeformten Schraubgewindes, und/oder einer daran angebrachten Befestigungslasche. Zusätzlich oder alternativ ist auch eine Befestigung durch Anschweißen an einer dem Fahrzeugkühlsystem zugeordneten Rahmenstruktur denkbar.

Insbesondere können die Gleitstange und der Befestigungsschenkel einstückiger Bestandteil des Führungselements sein, sodass sich das Führungselement in einem einzigen Arbeitsgang durch Abkanten und Biegen eines durchgehenden Materialstücks herstellen lässt. Bei dem durchgehenden Materialstück handelt es sich insbesondere um ein aus einer Stahl- oder Aluminiumlegierung bestehendes Voll- oder Rohrprofil. Das so gebildete Führungselement wird zum Schutz vor Korrosion durch Lackieren, Passivieren, Galvanisieren oder in ähnlicher Weise oberflächenbehandelt.

Vorzugsweise ist das Halteelement als Gleitschlitten ausgebildet. Der Gleitschlitten weist eine geschlitzte Öffnung zur Aufnahme der Gleitstange auf. Die geschlitzte Öffnung umgreift die Gleitstange in Gestalt eines Reiters zumindest partiell, und zwar derart, dass sich der Gleitschlitten entlang der Gleitstange weitgehend spielfrei verschieben lässt. Der Gleitschlitten kann aus einem selbstschmierenden und/oder hitzebeständigen Material, insbesondere aus Polytetraflourethylen, bestehen. Alternativ kann es sich um einen aus einer Stahl- oder Aluminiumlegierung hergestellten Gleitkörper handeln.

Das wenigstens eine Kühlelement ist mittels eines Scharniers schwenkbar mit dem Halteelement befestigt. Das Scharnier ist insbesondere als Bestandteil einer Rahmenstruktur des wenigstens einen Kühlelements ausgebildet. Damit ein Ausbau oder Austausch des wenigstens einen Kühlelements möglich ist, ist das Scharnier durch Verwendung geeigneter Befestigungselemente, beispielsweise mittels eines Schraubbolzens oder dergleichen, lösbar an dem Halteelement befestigt. Alternativ ist jedoch auch eine unlösbare Befestigung durch Verwendung einer mit dem Halteelement ausgebildeten Nietverbindung möglich.

Die Reinigung bzw. Wartung des wenigstens einen Kühlelements lässt sich weiter vereinfachen, wenn ein Verriegelungselement zur vorübergehenden Sicherung des Halteelements in der Betriebsposition und/oder der Wartungsposition vorgesehen ist. Insbesondere kann das Verriegelungselement ein Federelement zur Herstellung einer lösbaren Rastverbindung mit dem Befestigungsschenkel der Gleitschiene umfassen, sodass ein unbeabsichtigtes Verschieben des wenigstens einen Kühlelements bei der Durchführung der Reinigungs- bzw. Wartungsarbeiten und/oder während des Betriebs des Kraftfahrzeugs vermieden werden kann. Zusätzlich oder alternativ kann eine Sicherung des wenigstens einen Kühlelements in der Betriebsposition durch Herstellen einer lösbaren Schraubverbindung zwischen dem wenigstens einen Kühlelement und einem dem Fahrzeugkühlsystem zugeordneten Rahmenteil erfolgen.

Um eine ungehinderte Bewegung des wenigstens einen Kühlelements zwischen der Betriebsposition und der Wartungsposition zu ermöglichen, ist es von Vorteil, wenn das wenigstens eine Kühlelement mittels flexibler Kühlmittelleitungen mit dem Fahrzeugkühlsystem verbindbar ist. Die aus faserverstärktem Gummi bestehenden Kühlmittelleitungen sind vorzugsweise an der den Halteelementen abgewandten Seite des wenigstens einen Kühlelements angeordnet und dort mittels geeigneter Schlauchverbindungen lösbar angeschlossen.

Ferner ist es denkbar, dass an dem wenigstens einen Kühlelement eine Gleitführung ausgebildet ist, die derart mit dem Führungselement der Kühleranordnung zusammenwirkt bzw. mit diesem in Eingriff steht, dass ein weitgehend spielfreies Verschieben des wenigstens einen Kühlelements bis zum Erreichen einer zum Verschwenken vorgesehenen Zwischenposition gewährleistet ist. Die Gleitführung ist beispielsweise durch an der Rahmenstruktur des wenigstens einen Kühlelements ausgeformte Führungslaschen gebildet. Die Führungslaschen können insbesondere einstückiger Bestandteil der Rahmenstruktur des wenigstens einen Kühlelements und als Stanz-Biegeteil hergestellt sein. Ein manuelles Verschieben des wenigstens einen Kühlelements wird auf diese Weise, wie auch durch Anbringung eines Handgriffs, erleichtert.

Ist das wenigstens eine Kühlelement Bestandteil eines Kühlerstapels, so ist es von Vorteil, wenn wenigstens eines der innenliegenden Kühlelemente des Kühlerstapels in eine ausgerückte Position verbringbar ist, sodass dessen Rückseite bzw. die Vorderseite eines unmittelbar dahinter liegenden Kühlelements von außen zugänglich ist.

Des weiteren besteht die Möglichkeit, Sensormittel zur Erkennung der aktuellen Position des Halteelements und/oder des wenigstens einen Kühlelements vorzusehen. Erkennen die Sensormittel, dass sich das Halteelement und/oder das wenigstens eine Kühlelement außerhalb der Betriebsposition befindet, so wird ein Betrieb des Kraftfahrzeugs, beispielsweise durch Unterbrechung des Zündkreises des Verbrennungsmotors, unterbunden. Bei den Sensormitteln kann es sich um ein in der Betriebsposition des Halteelements und/oder des wenigstens einen Kühlelements betätigtes Schaltelement, beispielsweise einen elektromechanischen Schalter oder einen Näherungsschalter handeln.

Die erfindungsgemäße Kühleranordnung wird im Folgenden anhand der beigefügten Zeichnungen näher erläutert, wobei übereinstimmende Bezugszeichen identische oder zumindest funktionsgleiche Bauteile bezeichnen. Dabei zeigen:
- Fig. 1: eine perspektivische Ansicht einer aus dem Stand der Technik bekannten Kühleranordnung mit mehreren Kühlelementen, die in einem gemeinsamen Kühlerstapel angeordnet sind,
- Fig. 2a: eine perspektivische Ansicht einer erfindungsgemäßen Kühleranordnung, bei der wenigstens eines der Kühlelemente eines gemeinsamen Kühlerstapels aus einer Betriebsposition in eine zur Reinigung bzw. Wartung vorgesehene Wartungsposition verbringbar ist,
- Fig. 2b: eine perspektivische Ansicht der erfindungsgemäßen Kühleranordnung, bei der das wenigstens eine Kühlelement aus der in Fig. 2a dargestellten Betriebsposition in eine zum Verschwenken vorgesehene Zwischenposition verschoben ist,
- Fig. 2c: eine perspektivische Ansicht der erfindungsgemäßen Kühleranordnung, bei der das wenigstens eine Kühlelement aus der in Fig. 2b dargestellten Zwischenposition in eine zur Reinigung bzw. Wartung vorgesehene Wartungsposition verschwenkt ist,
- Fig. 2d: eine perspektivische Ansicht der erfindungsgemäßen Kühleranordnung, bei der zusätzlich wenigstens ein innenliegendes Kühlelement des Kühlerstapels in eine ausgerückte Position verbracht ist.

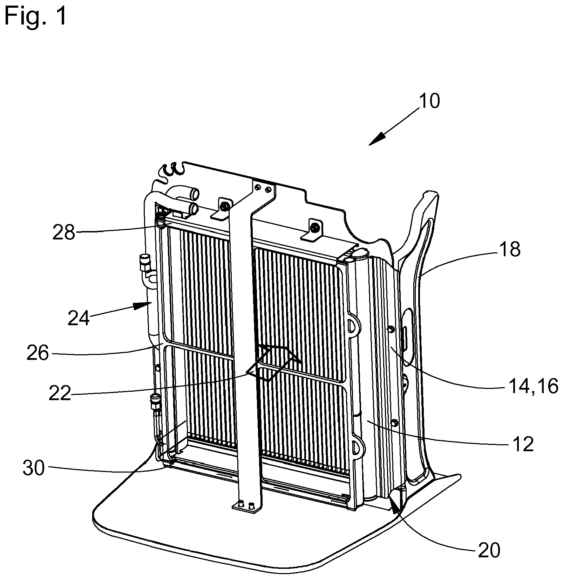

Fig. 1 zeigt eine perspektivische Ansicht einer aus dem Stand der Technik bekannten Kühleranordnung, wie sie als Bestandteil eines nicht dargestellten Fahrzeugkühlsystems in einem Motorraum eines landwirtschaftlichen Kraftfahrzeugs, beispielsweise eines Traktors, einer Erntemaschine oder einer selbstfahrenden Spritzmaschine, verwendet wird.

Ein derartiges Fahrzeugkühlsystem ist unter anderem in Zusammenhang mit John Deere Traktoren der Modellserie 5420 bekannt, wobei dieses zwischen einer aus Gründen der leichteren Zugänglichkeit im vorderen Bereich des Motorraums untergebrachten Fahrzeugbatterie und einem Verbrennungsmotor des Kraftfahrzeugs untergebracht ist.

Die aus dem Stand der Technik bekannte Kühleranordnung 10 weist mehrere hintereinander angeordnete Kühlelemente 12, 14 und 16 in Gestalt eines mit einer Rahmenstruktur 18 der Kühleranordnung 10 fest verbundenen Kühlerstapels 20 auf, wobei der Kühlerstapel 20 zur Abführung der beim Betrieb des Kraftfahrzeugs anfallenden Abwärme von einem gemeinsamen Kühlluftstrom 22 durchsetzt wird. Der Kühlluftstrom 22 wird mittels einer nicht dargestellten Luftansaugeinrichtung, beispielsweise durch Verwendung eines elektrisch angetriebenen Lüfteraggregats, erzeugt. Die Luftansaugeinrichtung ist hierbei zwischen der Kühleranordnung 10 und dem Verbrennungsmotor des Kraftfahrzeugs angeordnet.

Beispielsgemäß weist der Kühlerstapel 20 in Richtung des erzeugten Kühlluftstroms 22 gesehen einen Kondensator 12 einer Klimatisierungsanlage des Kraftfahrzeugs, einen Luft-Flüssigkeits-Kühler 14 eines Hochtemperaturkreislaufs zur Kühlung des Verbrennungsmotors des Kraftfahrzeugs und einen Luft-Flüssigkeits-Kühler 16 eines Niedertemperaturkreislaufs auf, wobei letzterer zur Kühlung eines Getriebeölkühlers eines Fahrzeuggetriebes dient.

Um ein Eindringen grober Verunreinigungen, die über den Kühlluftstrom 22 aus der Fahrzeugumgebung angesaugt werden, zu verhindern, ist dem Kühlerstapel 20 in Richtung des Kühlluftstroms 22 ein Filterelement 24 in Gestalt eines von einem Rahmen 26 getragenen grobmaschigen Metallsiebs vorgeschaltet, das sich zum Zwecke der Reinigung entlang einer an der Kühleranordnung 10 angeordneten schlitzförmigen Führung 28 bzw. 30 von Hand herausziehen lässt.

Staub- oder rauchförmige Schmutzpartikel werden durch das grobmaschige Filterelement 24 jedoch nur unzureichend zurückgehalten, sodass die Möglichkeit besteht, dass sich diese im Laufe der Zeit auf der Oberfläche der Kühlelemente 12, 14 und 16 ablagern. Da vor allem die innenliegenden Kühlelemente 14 und 16 des Kühlerstapels 20 von außen nicht unmittelbar zugänglich sind und sich daher nicht ohne Zerlegen der Kühleranordnung 10 und damit des Fahrzeugkühlsystems reinigen lassen, ist der Reinigungs- bzw. Wartungsaufwand dementsprechend hoch. Dies gilt vor allem dann, wenn der Kühlerstapel 20 weitere Kühlelemente, wie beispielsweise einen Getriebeölkühler und/oder einen Ladeluftkühler, umfassen soll, mithin also die Integrationsdichte des Kühlerstapels 20 und damit dessen Anfälligkeit gegenüber Verunreinigungen weiter zunimmt.

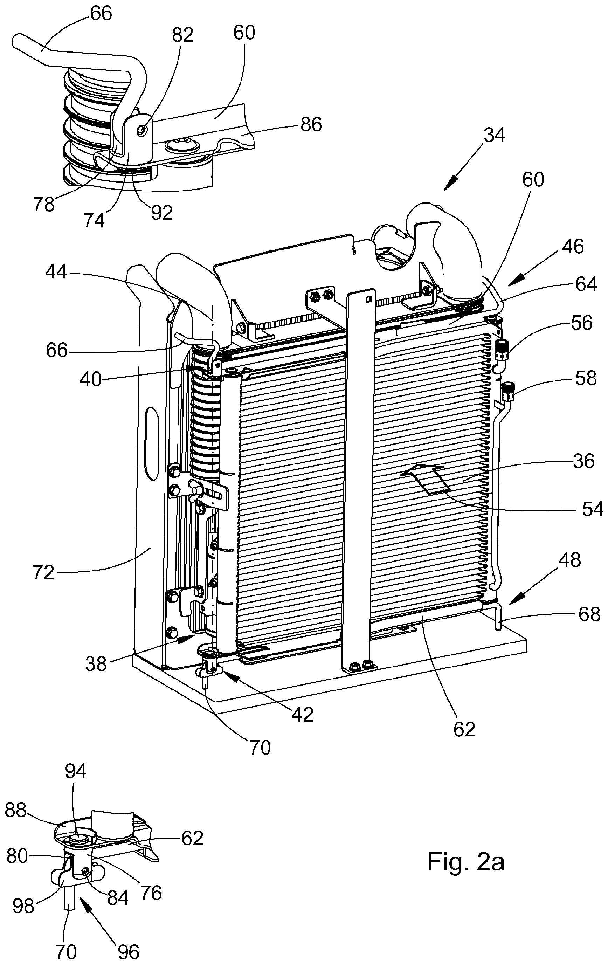

Fig. 2a bis Fig. 2d zeigen perspektivische Ansichten eines Ausführungsbeispiels der erfindungsgemäßen Kühleranordnung.

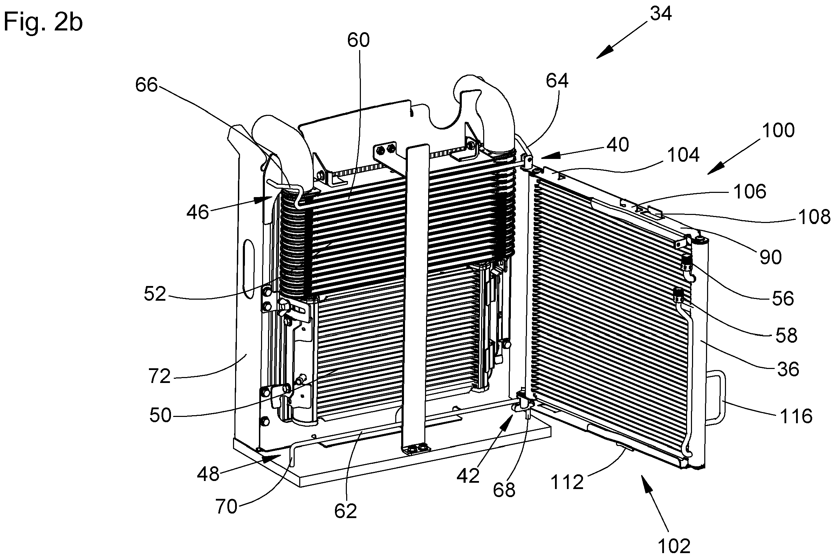

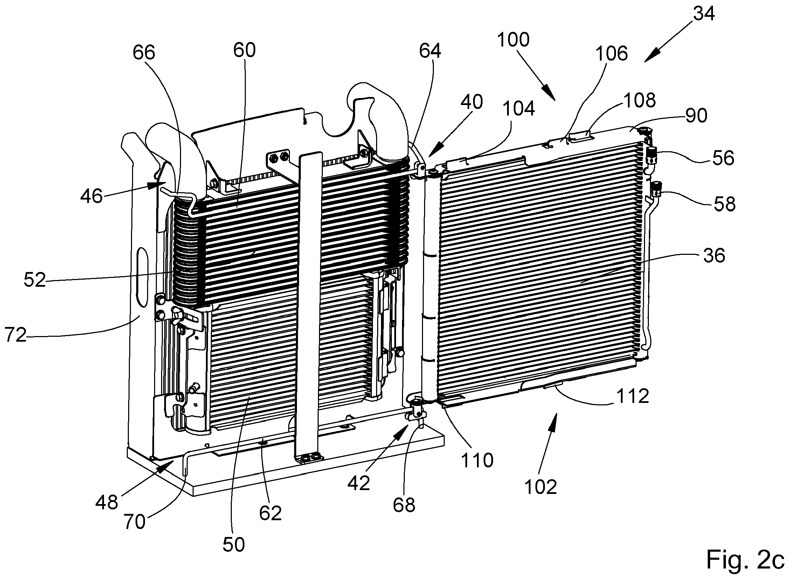

Die erfindungsgemäße Kühleranordnung 34 unterscheidet sich von der aus dem Stand der Technik bekannten und in Fig. 1 dargestellten Kühleranordnung 10 dahingehend, dass wenigstens eines der Kühlelemente 36 eines gemeinsamen Kühlerstapels 38 mittels eines oberen Halteelements 40 und eines unteren Halteelements 42 um eine bezüglich einer Stirnseite des wenigstens einen Kühlelements 36 verlaufende Achse 44 schwenkbar befestigt ist, wobei jedes der Halteelemente 40 bzw. 42 derart entlang eines an dem Fahrzeugkühlsystem bzw. an der Kühleranordnung 34 anbringbaren Führungselements 46 bzw. 48 längsverschiebbar angeordnet ist, dass sich das wenigstens eine Kühlelement 36 in Gestalt eines kassettenförmigen Einschubs aus einer Betriebsposition gemäß Fig. 2a, in der das wenigstens eine Kühlelement 36 zusammen mit weiteren Kühlelementen 50 und 52 des Kühlerstapels 38 von einem gemeinsamen Kühlluftstrom 54 durchsetzt wird, durch Verschieben bzw. Herausziehen in eine außerhalb des Kühlluftstroms 54 und damit des Fahrzeugkühlsystems bzw. der Kühleranordnung 34 liegende Zwischenposition gemäß Fig. 2b und anschließendes Verschwenken in eine zur Reinigung bzw. Wartung vorgesehene Wartungsposition in Richtung der Luftansaugseite des Fahrzeugkühlsystems bzw. der Kühleranordnung 34 gemäß Fig. 2c verbringen lässt.

Dementsprechend ist das wenigstens eine Kühlelement 36, bei dem es sich beispielsgemäß um einen Kondensator einer Klimatisierungseinrichtung des Kraftfahrzeugs handelt, ebenso wie auch die dahinter liegenden Kühlelemente 50 und 52, im vorliegenden Fall ein Getriebeölkühler und ein Ladeluftkühler, einem äußeren Zugriff zum Zwecke der Durchführung von Reinigungs- bzw. Wartungsarbeiten problemlos zugänglich. Dies gilt insbesondere dann, wenn die Kühleranordnung 34 im Bereich lenkbarer Vorderräder des Kraftfahrzeugs angeordnet ist, mithin also das wenigstens eine Kühlelement 36 sich durch Verschieben und anschließendes Verschwenken in eine frei zugängliche Position verbringen lässt.

Um eine ungehinderte Bewegung des wenigstens einen Kühlelements 36 zwischen der Betriebsposition und der Wartungsposition zu gewährleisten, ist dieses mittels nicht dargestellter flexibler Kühlmittelleitungen mit dem Fahrzeugkühlsystem bzw. der Kühleranordnung 34 verbunden. Die aus faserverstärktem Gummi bestehenden Kühlmittelleitungen sind an der den Halteelementen 40 und 42 abgewandten Seite des wenigstens einen Kühlelements 36 angeordnet und dort mittels entsprechender Schlauchverbindungen 56 und 58 lösbar angeschlossen.

Wie in Fig. 2a bis 2c zu erkennen ist, umfasst das Führungselement 46 bzw. 48 eine bügelförmige Gleitstange 60 bzw. 62. Die Gleitstange 60 bzw. 62 weist einen kreisförmigen Querschnitt mit einem Durchmesser im Bereich von 5 bis 15 mm auf.

Die Gleitstange 60 bzw. 62 umfasst jeweils an ihren beiden Enden im Wesentlichen senkrecht verlaufende Befestigungsschenkel 64, 66 bzw. 68, 70, die an einer Rahmenstruktur 72 des Fahrzeugkühlsystems bzw. der Kühleranordnung 34 angeschweißt sind. Im vorliegenden Fall sind Gleitstange 60 bzw. 62 und Befestigungsschenkel 64, 66 bzw. 68, 70 einstückiger Bestandteil des Führungselements 46 bzw. 48, wobei das Führungselement 46 bzw. 48 in diesem Fall in einem einzigen Arbeitsgang durch Abkanten und Biegen eines aus einer Stahllegierung bestehenden Voll- oder Rohrprofils hergestellt wird.

Das Halteelement 40 bzw. 42 ist im vorliegenden Fall als Gleitschlitten 74 bzw. 76 ausgebildet. Ausgehend von den beiden Detaildarstellungen in Fig. 2a weist der Gleitschlitten 74 bzw. 76 eine geschlitzte Öffnung 78 bzw. 80 zur Aufnahme der Gleitstange 60 bzw. 62 auf. Die geschlitzte Öffnung 78 bzw. 80 umgreift die Gleitstange 60 bzw. 62 in Gestalt eines Reiters zumindest teilweise, und zwar derart, dass sich der Gleitschlitten 74 bzw. 76 entlang der Gleitstange 60 bzw. 62 weitgehend spielfrei verschieben lässt. Bei dem Gleitschlitten 74 bzw. 76 handelt es sich um einen aus einer Stahllegierung hergestellten Gleitkörper, der - ebenso wie auch die Gleitstange 60 bzw. 62 - zum Schutz vor Korrosion verzinkt und anschließend lackiert ist.

Damit ein Herunterspringen des Gleitschlittens 74 bzw. 76 von der Gleitstange 60 bzw. 62 verhindert werden kann, ist die geschlitzte Öffnung 78 bzw. 80 des Gleitschlittens 74 bzw. 76 an ihrem äußeren Ende mittels eines Sicherungssplints 82 bzw. 84 verschlossen.

Das wenigstens eine Kühlelement 36 ist mittels eines Scharniers 86 bzw. 88 schwenkbar mit dem Halteelement 40 bzw. 42 befestigt. Das Scharnier 86 bzw. 88 ist als Bestandteil einer Rahmenstruktur 90 des wenigstens einen Kühlelements 36 ausgebildet, wobei dieses unlösbar mittels einer mit dem Halteelement 40 bzw. 42 ausgebildeten Nietverbindung 92 bzw. 94 befestigt ist.

Um die Reinigung bzw. Wartung des wenigstens einen Kühlelements 36 weiter zu vereinfachen, ist ein Verriegelungselement 96 zur vorübergehenden Sicherung bzw. Arretierung des unteren Halteelements 42 in der Betriebsposition und/oder der Wartungsposition vorgesehen. Das Verriegelungselement 96 umfasst ein als zweiseitige Klammer ausgebildetes Federelement 98 zur Herstellung einer lösbaren Rast- bzw. Schnappverbindung mit dem jeweiligen Befestigungsschenkel 68 bzw. 70 der unteren Gleitstange 62, sodass ein unbeabsichtigtes Verschieben des wenigstens einen Kühlelements 36 bei der Durchführung der Reinigungs- bzw. Wartungsarbeiten und/oder während des Betriebs des Kraftfahrzeugs vermieden werden kann. Das Federelement 98 ist hierbei mittels des Sicherungssplints 84 innerhalb der geschlitzten Öffnung 80 des unteren Halteelements 42 befestigt.

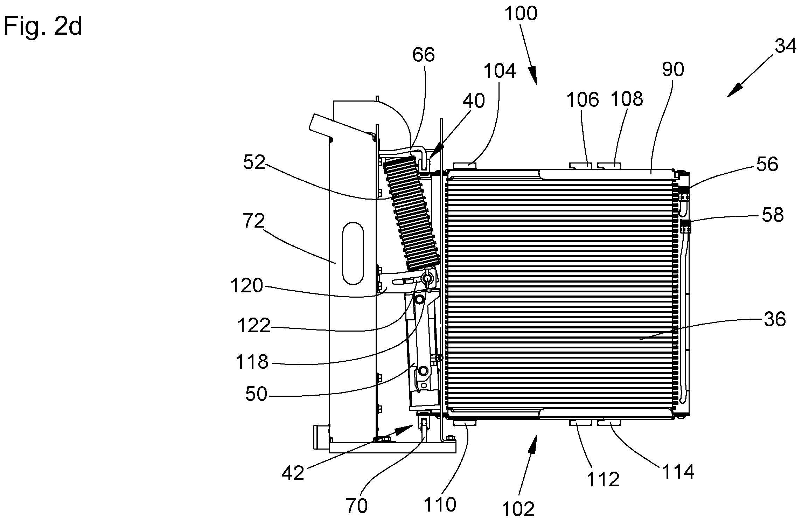

Zusätzlich ist an dem wenigstens einen Kühlelement 36 eine Gleitführung 100 bzw. 102 ausgebildet, die derart mit dem Führungselement 46 bzw. 48 zusammenwirkt, dass ein weitgehend spielfreies Verschieben des wenigstens einen Kühlelements 36 entlang des Führungselements 46 bzw. 48 gewährleistet ist. Die Gleitführung 100 bzw. 102 ist durch an der Rahmenstruktur 90 des wenigstens einen Kühlelements 36 ausgeformte Führungslaschen 104, 106, 108 bzw. 110, 112, 114 gebildet, die einen in Einschubrichtung aufgeweiteten Einführbereich aufweisen und einstückiger Bestandteil der Rahmenstruktur 90 des wenigstens einen Kühlelements 36 sind. Ein manuelles Verschieben des wenigstens einen Kühlelements 36 wird auf diese Weise, wie auch durch Anbringung eines Handgriffs 116, erleichtert.
Um einen Zugang zur Rückseite der innenliegenden Kühlelemente 50 und 52 zu ermöglichen, sind diese nach Lösen einer durch eine Flügelschraube 118 gebildeten Sicherung entlang eines in einer Halterung 120 ausgebildeten Führungsschlitzes 122 in eine ausgerückte Position gemäß Fig. 2d verschwenkbar.

Entsprechend einer nicht dargestellten Weiterbildung der erfindungsgemäßen Kühleranordnung 34 sind Sensormittel zur Erkennung der aktuellen Position des Halteelements 40 bzw. 42 und/oder des wenigstens einen Kühlelements 36 vorgesehen. Erkennen die Sensormittel, dass sich das Halteelement 40 bzw. 42 und/oder das wenigstens eine Kühlelement 36 außerhalb der Betriebsposition befindet, so wird ein Betrieb des Kraftfahrzeugs beispielsweise durch Unterbrechung des Zündkreises des Verbrennungsmotors unterbunden. Bei den Sensormitteln handelt es sich um ein in der Betriebsposition des Halteelements 40 bzw. 42 und/oder des wenigstens einen Kühlelements 36 betätigtes Schaltelement, beispielsweise einen elektromechanischen Schalter oder einen Näherungsschalter.

Insbesondere erschließen sich für den Fachmann im Lichte der vorstehenden Beschreibung sowie der Zeichnungen weitere Alternativen, Modifikationen und Varianten, die unter die vorliegende Erfindung fallen.

## Patentansprüche

1. Kühleranordnung für ein Fahrzeugkühlsystem, bei der wenigstens ein Kühlelement (36) eines Kühlerstapels (38) mittels eines oberen Halteelements (40) und eines unteren Halteelements (42) um eine bezüglich einer Stirnseite des wenigstens einen Kühlelements (36) verlaufende Achse (44) schwenkbar befestigt ist, wobei jedes der Halteelemente (40, 42) derart entlang eines an der Kühleranordnung (34) angebrachten Führungselements (46, 48) längsverschiebbar angeordnet ist, dass sich das wenigstens eine Kühlelement (36) in Gestalt eines kassettenförmigen Einschubs aus einer Betriebsposition, in der das wenigstens eine Kühlelement (36) zusammen mit weiteren Kühlelementen (50, 52) des Kühlerstapels (38) von einem gemeinsamen Kühlluftstrom (54) durchsetzt wird, durch Verschieben in eine außerhalb des Kühlluftstroms (54) liegende Zwischenposition und anschließendes Verschwenken in eine zur Reinigung vorgesehene Wartungsposition in Richtung der Luftansaugseite der Kühleranordnung (34) verbringen lässt.

2. Kühleranordnung nach Anspruch 1,
**dadurch gekennzeichnet, dass** das Führungselement (46, 48) eine Gleitstange (60, 62) umfasst.

3. Kühleranordnung nach Anspruch 1 oder 2,
**dadurch gekennzeichnet, dass** das Führungselement (46, 48) einen Befestigungsschenkel (64, 66, 68, 70) zur Anbringung an dem Fahrzeugkühlsystem umfasst.

4. Kühleranordnung nach einem der Ansprüche 1 bis 3,
**dadurch gekennzeichnet, dass** die Gleitstange (60, 62) und der Befestigungsschenkel (64, 66, 68, 70) einstückiger Bestandteil des Führungselements (46, 48) sind.

5. Kühleranordnung nach einem der Ansprüche 1 bis 4,
**dadurch gekennzeichnet, dass** das Halteelement (40, 42) als Gleitschlitten (74, 76) ausgebildet ist.

6. Kühleranordnung nach einem der Ansprüche 1 bis 5,
**dadurch gekennzeichnet, dass** der Gleitschlitten (74, 76) eine geschlitzte Öffnung (78, 80) zur Aufnahme der Gleitstange (60, 62) aufweist.

7. Kühleranordnung nach einem der Ansprüche 1 bis 6,
**dadurch gekennzeichnet, dass** der Gleitschlitten (74, 76) aus einem selbstschmierenden und/oder hitzebeständigen Material, insbesondere aus Polytetraflourethylen, besteht.

8. Kühleranordnung nach einem der Ansprüche 1 bis 7,
**dadurch gekennzeichnet, dass** das wenigstens eine Kühlelement (36) mittels eines Scharniers (86, 88) schwenkbar mit dem Halteelement (40, 42) befestigt ist.

9. Kühleranordnung nach einem der Ansprüche 1 bis 8,
**dadurch gekennzeichnet, dass** ein Verriegelungselement (96) zur Sicherung des Halteelements (40, 42) in der Betriebsstellung und/oder der Wartungsstellung des wenigstens einen Kühlelements (36) vorgesehen ist.

10. Kühleranordnung nach einem der Ansprüche 1 bis 9,
**dadurch gekennzeichnet, dass** das Verriegelungselement (96) ein Federelement (98) zur Herstellung einer lösbaren Rastverbindung mit dem Befestigungsschenkel (68, 70) der Gleitstange (62) umfasst.

11. Kühleranordnung nach einem der Ansprüche 1 bis 10,
**dadurch gekennzeichnet, dass** das wenigstens eine Kühlelement (36) mittels flexibler Kühlmittelleitungen mit dem Fahrzeugkühlsystem verbindbar ist.

12. Kühleranordnung nach einem der Ansprüche 1 bis 11,
**dadurch gekennzeichnet, dass** an dem wenigstens einen Kühlelement (36) eine Gleitführung (100, 102) ausgebildet ist, die derart mit dem Führungselement (46, 48) zusammenwirkt, dass das wenigstens eine Kühlelement (36) beim Verschieben geführt wird.

13. Kühleranordnung nach einem der Ansprüche 1 bis 12, **dadurch gekennzeichnet, dass** das wenigstens eine Kühlelement (36) einen Handgriff (116) aufweist.

14. Kühleranordnung nach einem der Ansprüche 1 bis 13,
**dadurch gekennzeichnet, dass** das wenigstens eine Kühlelement (36) Bestandteil eines Kühlerstapels (38) ist, wobei ein innenliegendes Kühlelement (50, 52) des Kühlerstapels (38) in eine ausgerückte Position verbringbar ist.

15. Kühleranordnung nach einem der Ansprüche 1 bis 14,
**dadurch gekennzeichnet, dass** ein Sensormittel zur Erkennung der aktuellen Position des Halteelements (40, 42) und/oder des wenigstens einen Kühlelements (36) vorgesehen ist.

16. Fahrzeugkühlsystem mit einer Kühleranordnung nach einem der Ansprüche 1 bis 15.

## Claims

1. Cooler arrangement for a vehicle cooling system, in which cooler arrangement at least one cooling element (36) of a cooler stack (38) is fastened by means of an upper holding element (40) and a lower holding element (42) such that it can be pivoted about an axis (44) which runs with regard to an end side of the at least one cooling element (36), each of the holding elements (40, 42) being arranged such that it can be displaced longitudinally along a guide element (46, 48) which is attached on the cooler arrangement (34), in such a way that the at least one cooling element (36), in the form of a cartridge-shaped slide-in module, can be moved from an operating position, in which the at least one cooling element (36) is flowed through together with further cooling elements (50, 52) of the cooler stack (38) by a common cooling air flow (54), by way of displacement into an intermediate position which lies outside the cooling air flow (54) and subsequent pivoting in the direction of the air intake side of the cooler arrangement (34) into a maintenance position which is provided for cleaning purposes.

2. Cooler arrangement according to Claim 1, **characterized in that** the guide element (46, 48) comprises a sliding bar (60, 62).

3. Cooler arrangement according to Claim 1 or 2, **characterized in that** the guide element (46, 48) comprises a fastening limb (64, 66, 68, 70) for attachment to the vehicle cooling system.

4. Cooler arrangement according to one of Claims 1 to 3, **characterized in that** the sliding bar (60, 62) and the fastening limb (64, 66, 68, 70) are an integral constituent part of the guide element (46, 48).

5. Cooler arrangement according to one of Claims 1 to 4, **characterized in that** the holding element (40, 42) is configured as a sliding carriage (74, 76).

6. Cooler arrangement according to one of Claims 1 to 5, **characterized in that** the sliding carriage (74, 76) has a slotted opening (78, 80) for receiving the sliding bar (60, 62).

7. Cooler arrangement according to one of Claims 1 to 6, **characterized in that** the sliding carriage (74, 76) consists of a self-lubricating and/or heat-resistant material, in particular of polytetrafluoroethylene.

8. Cooler arrangement according to one of Claims 1 to 7, **characterized in that** the at least one cooling element (36) is fastened to the holding element (40, 42) pivotably by means of a hinge (86, 88).

9. Cooler arrangement according to one of Claims 1 to 8, **characterized in that** a locking element (96) is provided for securing the holding element (40, 42) in the operating position and/or the maintenance position of the at least one cooling element (36).

10. Cooler arrangement according to one of Claims 1 to 9, **characterized in that** the locking element (96) comprises a spring element (98) for establishing a releasable latching connection to the fastening limb (68, 70) of the sliding bar (62).

11. Cooler arrangement according to one of Claims 1 to 10, **characterized in that** the at least one cooling element (36) can be connected to the vehicle cooling system by means of flexible coolant lines.

12. Cooler arrangement according to one of Claims 1 to 11, **characterized in that** a sliding guide (100, 102) is configured on the at least one cooling element (36), which sliding guide (100, 102) interacts with the guide element (46, 48) in such a way that the at least one cooling element (36) is guided during the displacement.

13. Cooler arrangement according to one of Claims 1 to 12, **characterized in that** the at least one cooling element (36) has a handle (116).

14. Cooler arrangement according to one of Claims 1 to 13, **characterized in that** the at least one cooling element (36) is a constituent part of a cooler stack (38), it being possible for an inner cooling element (50, 52) of the cooler stack (38) to be moved into a moved- out position.

15. Cooler arrangement according to one of Claims 1 to 14, **characterized in that** a sensor means is provided for detecting the current position of the holding element (40, 42) and/or of the at least one cooling element (36).

16. Vehicle cooling system having a cooler arrangement according to one of Claims 1 to 15.

## Revendications

1. Agencement de radiateur pour un système de refroidissement de véhicule, dans lequel au moins un élément de refroidissement (36) d'un empilement de radiateur (38) est fixé au moyen d'un élément de retenue supérieur (40) et d'un élément de retenue inférieur (42) de manière à pouvoir pivoter autour d'un axe (44) s'étendant par rapport à un côté frontal de l'au moins un élément de refroidissement (36), chacun des éléments de retenue (40, 42) étant disposé de manière déplaçable longitudinalement le long d'un élément de guidage (46, 48) monté sur l'agencement de radiateur (34), de telle sorte que l'au moins un élément de refroidissement (36), sous la forme d'un insert en forme de cassette, puisse être amené, d'une position fonctionnelle dans laquelle l'au moins un élément de refroidissement (36) conjointement avec d'autres éléments de refroidissement (50, 52) de l'empilement de radiateur (38) est traversé par un flux d'air de refroidissement commun (54), par déplacement dans une position intermédiaire située à l'extérieur du flux d'air de refroidissement (54) puis pivotement subséquent dans une position d'entretien prévue pour le nettoyage, dans la direction du côté d'aspiration d'air de l'agencement de radiateur (34).

2. Agencement de radiateur selon la revendication 1, **caractérisé en ce que** l'élément de guidage (46, 48) comprend une tige coulissante (60, 62).

3. Agencement de radiateur selon la revendication 1 ou 2, **caractérisé en ce que** l'élément de guidage (46, 48) comprend une branche de fixation (64, 66, 68, 70) pour le montage sur le système de refroidissement du véhicule.

4. Agencement de radiateur selon l'une quelconque des revendications 1 à 3, **caractérisé en ce que** la tige coulissante (60, 62) et la branche de fixation (64, 66, 68, 70) sont des constituants d'une seule pièce de l'élément de guidage (46, 48).

5. Agencement de radiateur selon l'une quelconque des revendications 1 à 4, **caractérisé en ce que** l'élément de retenue (40, 42) est réalisé sous forme de chariot coulissant (74, 76).

6. Agencement de radiateur selon l'une quelconque des revendications 1 à 5, **caractérisé en ce que** le chariot coulissant (74, 76) présente une ouverture fendue (78, 80) pour recevoir la barre coulissante (60, 62).

7. Agencement de radiateur selon l'une quelconque des revendications 1 à 6, **caractérisé en ce que** le chariot coulissant (74, 76) se compose d'un matériau autolubrifiant et/ou résistant à la chaleur, en particulier de polytétrafluoroéthylène.

8. Agencement de radiateur selon l'une quelconque des revendications 1 à 7, **caractérisé en ce que** l'au moins un élément de refroidissement (36) est fixé de manière pivotante à l'élément de retenue (40, 42) au moyen d'une charnière (86, 88).

9. Agencement de radiateur selon l'une quelconque des revendications 1 à 8, **caractérisé en ce qu'**un élément de verrouillage (96) est prévu pour fixer l'élément de retenue (40, 42) dans la position fonctionnelle et/ou dans la position d'entretien de l'au moins un élément de refroidissement (36).

10. Agencement de radiateur selon l'une quelconque des revendications 1 à 9, **caractérisé en ce que** l'élément de verrouillage (96) comprend un élément de ressort (98) pour établir une connexion par encliquetage amovible avec la branche de fixation (68, 70) de la tige coulissante (62).

11. Agencement de radiateur selon l'une quelconque des revendications 1 à 10, **caractérisé en ce que** l'au moins un élément de refroidissement (36) peut être connecté au système de refroidissement du véhicule au moyen de conduites de réfrigérant flexibles.

12. Agencement de radiateur selon l'une quelconque des revendications 1 à 11, **caractérisé en ce qu'**un guide à coulisse (100, 102) est réalisé au niveau de l'au moins un élément de refroidissement (36), lequel coopère avec l'élément de guidage (46, 48) de telle sorte que l'au moins un élément de refroidissement (36) soit guidé lors du coulissement.

13. Agencement de radiateur selon l'une quelconque des revendications 1 à 12, **caractérisé en ce que** l'au moins un élément de refroidissement (36) présente une poignée (116).

14. Agencement de radiateur selon l'une quelconque des revendications 1 à 13, **caractérisé en ce que** l'au moins un élément de refroidissement (36) fait partie d'un empilement de radiateur (38), un élément de refroidissement intérieur (50, 52) de l'empilement de radiateur (38) pouvant être amené dans une position sortie.

15. Agencement de radiateur selon l'une quelconque des revendications 1 à 14, **caractérisé en ce qu'**un moyen de capteur est prévu pour détecter la position actuelle de l'élément de retenue (40, 42) et/ou de l'au moins un élément de refroidissement (36).

16. Système de refroidissement de véhicule comprenant un agencement de radiateur selon l'une quelconque des revendications 1 à 15.
